# EUROPEAN PATENT SPECIFICATION

(11) **EP 2 306 277 B1**
(45) Date of publication and mention of the grant of the patent: **10.02.2016**
(21) Application number: 10179445.1
(22) Date of filing: 20.09.2005
(51) Int. Cl.: G06F 17/30, G06F 3/0481

(54) **System and method for controlling display windows**
System und Methode zur Kontrolle von Bildschirmfenstern
Dispositif et procédé pour commander des fenêtres d'affichage

(30) Priority: 24.09.2004 US 948865
(43) Date of publication of application: 06.04.2011
(62) Divisional of application: 05798866.9
(73) Proprietor: Cimpress Schweiz GmbH, 8406 Winterthur (CH)
(72) Inventor: Barrett, Daniel, J., Auburndale, MA 02466 (US)
(74) Representative: Fleuchaus, Michael A.

(56) References cited:
- WO-A-02/07030
- WO-A-02/079951
- POPE M: "BASIC OF COOKIES IN ASP.NET" VISUAL BASIC USER EDUCATION, XX, XX, 1 January 2003 (2003-01-01), pages 1-10, XP008076179
- S. YAGIELOWICZ: "A Console Comeback" XBIZ.COM, [Online] 1 May 2002 (2002-05-01) , pages 1-4, XP002366785 Retrieved from the Internet: URL:xbiz.com/article_piece.php?cat=35&id=1 583> [retrieved on 2006-02-08]
- P. MARX: "PopUp-Aufruf mit Cookie steuern" YUBB.DE - DIE WEBMASTER COMMUNITY, [Online] 18 June 2004 (2004-06-18), pages 1-2, XP002366786 Retrieved from the Internet: URL:www.yubb.de/artikel194.html> [retrieved on 2006-02-08]
- MICHAEL MONCUR: "Web Advertising Basics: Understanding Ad Formats" MICHAEL MONCUR'S WEBSITE WORKSHOP, [Online] 17 October 2003 (2003-10-17), pages 1-4, XP002366787 Retrieved from the Internet: URL:www.wsworkshop.com/money/ad-formats.ht ml> [retrieved on 2006-02-08]

## Description

### Copyright Notice

A portion of the disclosure of this patent document contains material which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### Field of the Invention

The present invention relates to the opening and controlling of windows displayed to a computer user.

### Background of the Invention

Most computer users who access World Wide Web sites are very familiar with pop-up windows. As typically implemented, a pop-up is a relatively small window that appears, or "pops up," on top of the existing text or images on the user display. Pop-up windows can be broadly categorized as being either requested or unrequested. A requested window is created in direct response to a user input, such as a mouse click. An unrequested window is created in a manner that is not in direct response to a user action.

On the Web, unrequested pop-up windows are widely used for displaying advertising and promotional content. Because many computer users find unrequested promotional material to be intrusive, distracting, and irritating, a number of third-party computer programs designed to block unrequested windows have been developed and are commercially available from various vendors. In addition, the vendors of popular computer browsers, such as Microsoft and Netscape, incorporate unrequested-window-blocking capabilities into the latest versions of their browser products. These blocking products vary in their design and features, but they typically attempt to block unrequested windows by either blocking the execution of code that would open the window, or by detecting that an unrequested window has been opened and immediately causing it to be closed.

Because they typically block all unrequested windows indiscriminately, blocking programs pose a particular problem for Web enterprises that have designed their sites and their user experience to incorporate and take advantage of this type of window. For example, a web site might need to display pop-up information to a particular user, when that information is not known at the time of the user's initial action, but becomes known later based on the outcome of processing of data supplied by the user. For example, a site that requires users to have a member account and to log in when accessing the site may wish to display a pop-up window with additional user-specific information, but only to certain users who have successfully logged in. Only after the server has received and processed the user's login information will the requirement for and content of the pop-up window be known. As another example, on an e-commerce site, the operator of the site may wish to show a pop-up window only to customers whose credit card information is successfully processed, or only to customers in a certain geographic region, or who used a certain method of payment, or who are otherwise determined to meet one or more criteria established by the operator of the site. Only after the user's billing information has been successfully processed can the site determine the need for and content of the information to be displayed. Because these types of pop-up windows have typically been opened at the direction and discretion of the site operator, and not opened in direct response to an action of the user, typical blocking programs assume they are of no value to the user and they are blocked.

Web enterprises may have spent considerable time and resources designing their sites and their user experience to incorporate and take advantage of so-called unrequested pop-up windows as a part of their normal site flow and process. Blockers of unrequested windows interfere with the normal operation of these sites, and users will not experience the site in the manner it was intended by the site operator. The user may never see important or useful information that the site operator intended to present. There is, therefore, a clear need for a system and method by which a site operator can, without relying on the use of unrequested windows, delay the decision of whether or not to show a window to a particular individual, and delay the selection of the specific content to be displayed to a particular individual.

S. Yagielowicz: "A Console Comeback", xbiz.com [online], 1 May 2002, pages 1 to 4 discloses pop-under windows that are only visible to the user after having closed his current browser session window. In this context, a cookie is used in order to avoid the stacking of multiple copies of the same pop-under window.

P. Marx: "PopUp-Aufrufe mit Cookie steuern", yubb.de - Die Webmaster Community [online], 18 June 2004, pages 1 to 2 discloses a similar cookie based control over the number of popup windows being generated.

### Summary

The present invention uses a requested window to simulate the behavior of an unrequested window, thereby preventing the window from being blocked by a popup blocker. The present invention allows a site operator to avoid the use of windows that would be identified as being unrequested, yet still delay the decision of whether to show a window to a user, and delay the selection of the specific content that will be displayed to the client in the window.

In accordance with one aspect of the invention, a requested window is opened on the client display in response to a user action and then hidden (minimized). The programming code running within the window then waits for a signal, which will eventually arrive via a browser cookie termed the "control cookie." If the control cookie is detected by the window, and the content of the cookie is a URL (uniform resource locator), the window becomes unhidden (maximized) to make it visible to the user of the client computer, and the content from the URL specified in the cookie is displayed in the window. The visual effect of this action simulates an unrequested window. If the cookie has other designated content, or is not detected within a specific period of time, other actions may be taken, such as closing the window.

These and other aspects, features, and benefits of the invention will be understood from a reading of the following description with reference to the attached figures.

### Brief Description of the Drawings

Fig. 1 is a block diagram of a networked computing environment in which the invention can be employed.
Figs. 2A-2E are representations of displays presented to a user of client computer 110.
Fig. 3 is a flow diagram of a method of controlling a window.

### Description

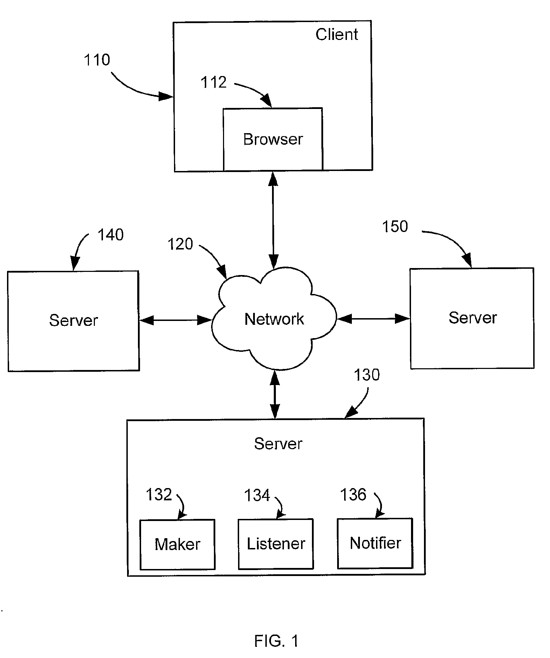

Referring to Fig. 1, a representative group of computer systems capable of communicating via a network is depicted. In the embodiment discussed below, client system 110 is a typically equipped and configured personal computer running a commercially available browser program 112, such as Microsoft Explorer, and connected to a network 120, such as the World Wide Web, which allows client 110 to send requests to and receive information from a plurality of server systems. Client 110 could also be a portable computer, tablet computer, or any other system that is capable of running a browser program, has a display screen or other device for displaying to the user information received from a remote server, and has one or more devices, such as a mouse or keyboard, for receiving inputs from the user of the system.

In the embodiment discussed herein, server 130 is providing the Web presence of an e-commerce company, but the invention is not so limited. Server 130 makes available Web page content and tools that allow client computers, such as client 110, to access server 130 to receive and view Web pages and to exchange data and commands with server 130. In this manner, for example, the user of client 110 can select and place an order electronically for products and/or services offered by the operator of server 130. While server 130 is represented as a single block, it will be understood that it could be comprised of multiple servers, data storage systems, and related systems operating cooperatively. In addition to communicating and interacting with clients, server 130 can communicate with other server systems, such as servers 140 and 150, connected to network 120. As will be discussed in more detail below, server 130 includes special purpose software modules maker 132, listener 134, and notifier 136.

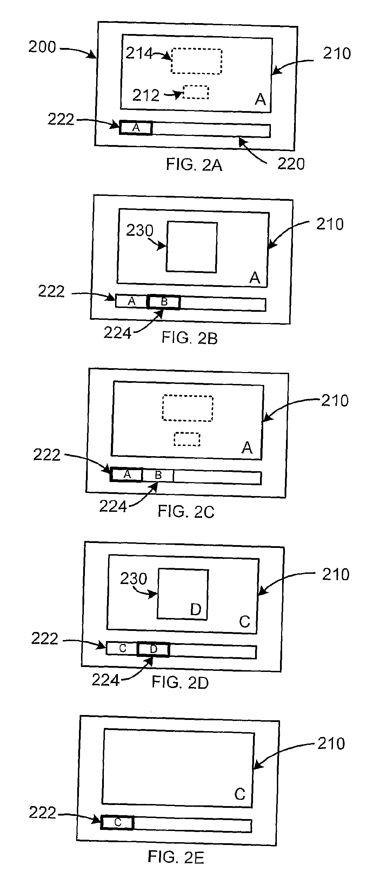

Figs. 2A-2E show representations of information displayed to the user of client 110 on display device 200. Display 200 provides a main window 210, such as a typical web browser, for displaying Web pages and other content. The term "page" is used herein to refer collectively to Web content provided by a server for displaying to the user in a window. It will be understood that Figs. 2A-2E are simplified for clarity of presentation. Detailed page content is not shown, and pages are identified by a capital letter appearing in the lower right corner.

In the disclosed embodiment, a window on client 110 will be "hidden" and "unhidden." This action may be accomplished in various ways, but for the purposes of this discussion, it is assumed that client 110 is running an operating system, such as the Microsoft Windows operating system, that displays a task bar 220. As is well understood, the task bar provides a visual indication to the user of programs currently running on the client system by displaying a task bar button for each separate program instance. When a window is hidden (minimized), it disappears from main display 200, but a task bar button such as 224 representing that window remains in task bar 220. In Figs, 2A-2E, the task bar button that is associated with the currently active window is indicated by a bold border. In the example shown in Fig. 2A, browser 112 is the only currently active program and the user is currently viewing page A in display area 210. This is indicated by button 222, labeled "A" in Fig. 2A, being the only button displayed on task bar 220. The information presented to a user of client 110 on display 200 would typically include additional indicators, tool bars, and controls, not shown, displayed above, below, and/or to the sides of main window 210.

For the purposes of discussion, page A will represent a billing page of an e-commerce Web site, but it will be understood that the invention is not so limited and could be readily employed in a variety of circumstances. In Fig. 2A, the content of page A displayed to the user includes control 212, selectable by the user to initiate the purchase process. Control 212 could be represented to the user in various known ways, such as a button labeled "Submit" or as an image or a text hyperlink. Page A also displays one or more selection tools and/or data entry fields for user-supplied information, collectively depicted as information block 214. In the example of a billing page, the information entered by the user in block 214 would typically include the user's name and credit card details, but in other applications could be a user name and password, one or more menu choices or other selections, or any number of other items. When control 212 is activated by the user, such as by a mouse click or keyboard entry, the page A code will cause the user-supplied information from block 214 to be transmitted to server 130 for processing.

The specific content to be displayed next to the user is dependent on the outcome of server 130 processing of some or all of the information supplied by the user. Server 130 will first examine the received information to check for obvious errors by the user, such as the failure to complete all required data fields in information block 214. If user errors in information block 214 are detected, page A will be redisplayed to the user along with an appropriate notification to the user that additional or corrected information is required. After this initial check, additional processing may be performed by server 130 or, in some cases, processing by other servers may also be involved. For example, most e-commerce sites do not directly deal with credit card companies but, instead, have a contractual relationship with another company that specializes in providing payment processing services. In this situation, server 130 will receive the credit card information from client 110 and forward it to a remote payment processing server 140. The operator of server 140 would, in turn, interact as necessary with the computer systems of the appropriate credit card issuer and, in due course, send a response back to server 130 indicating whether the requested credit card transaction was or was not successfully processed.

Depending on the response from payment processor 140, server 130 will send either a "transaction failed" page or a "transaction successful" page. At the time that server 130 sends the appropriate page back to client 112, the operator of server 130 may also wish to display additional information in a pop-up window to customers whose credit card transaction was successfully processed. The site operator may wish to display the window to all customers whose transaction was successfully processed or to only a subset of customers, such as, for example, special instructions, information, or offers only to those customers that ordered a particular product, that are having the product shipped to a particular geographical region or via a particular carrier, or that made the purchase using a particular type of credit card.

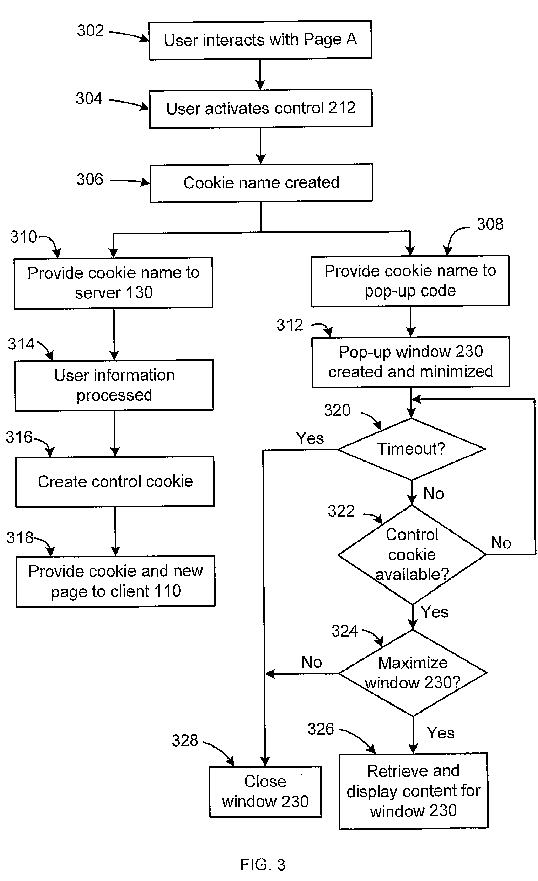

Referring to Figs. 2A-2E and Fig. 3, an illustrative embodiment and application of the current invention will be discussed. In summary, when server 130 transmits the Page A code to client 110, server 130 also transmits maker code 132 and listener code 134. Maker code 132 includes (a) pop-up window activation code that responds to the user's activation of control 212 by opening a requested pop-up window, (b) cookie name generation code that responds to the user's initiation of the purchase process by generating a control cookie name, and (c) code that provides the generated cookie name to both server 130 and to the pop-up window code. An example of one embodiment of the maker code in the JavaScript and HTML languages is shown in Table 1.

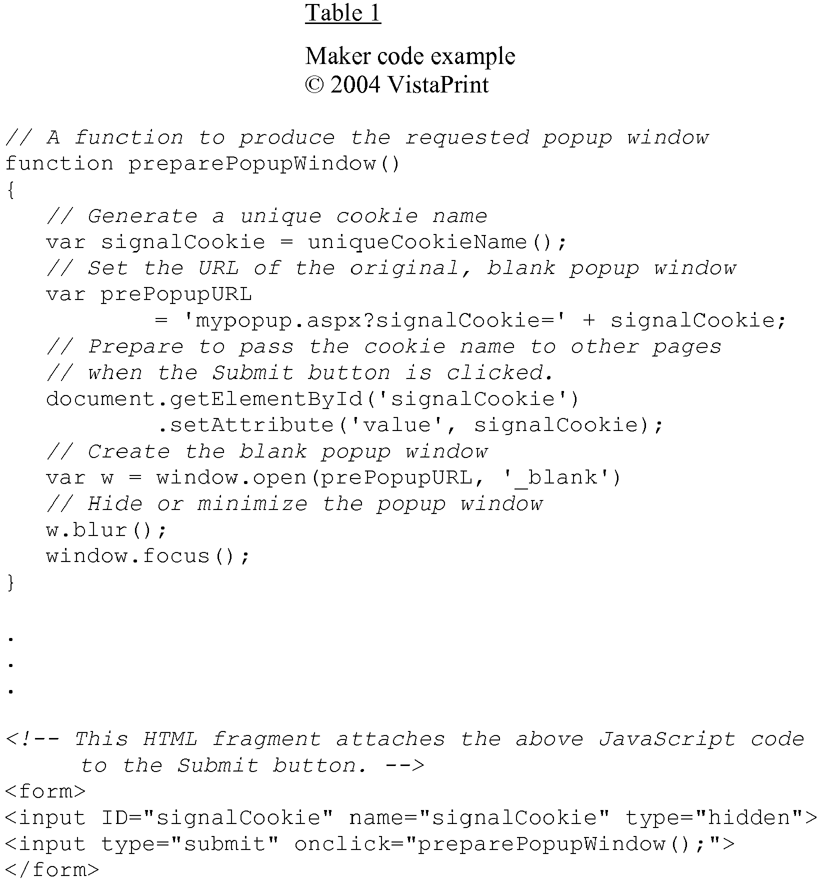

Listener code 134 executes with the pop-up window code to repetitively poll for the availability of a cookie having the received control cookie name and, when the control cookie is detected, take the desired action: maximize the window and display the content specified by the URL contained in the control cookie, or close the window. Listener code 134 also includes timeout code that closes window 230 if the control cookie is not detected within a specified timeout period. An example of one embodiment of the listener code in the JavaScript language is shown in Table 2.

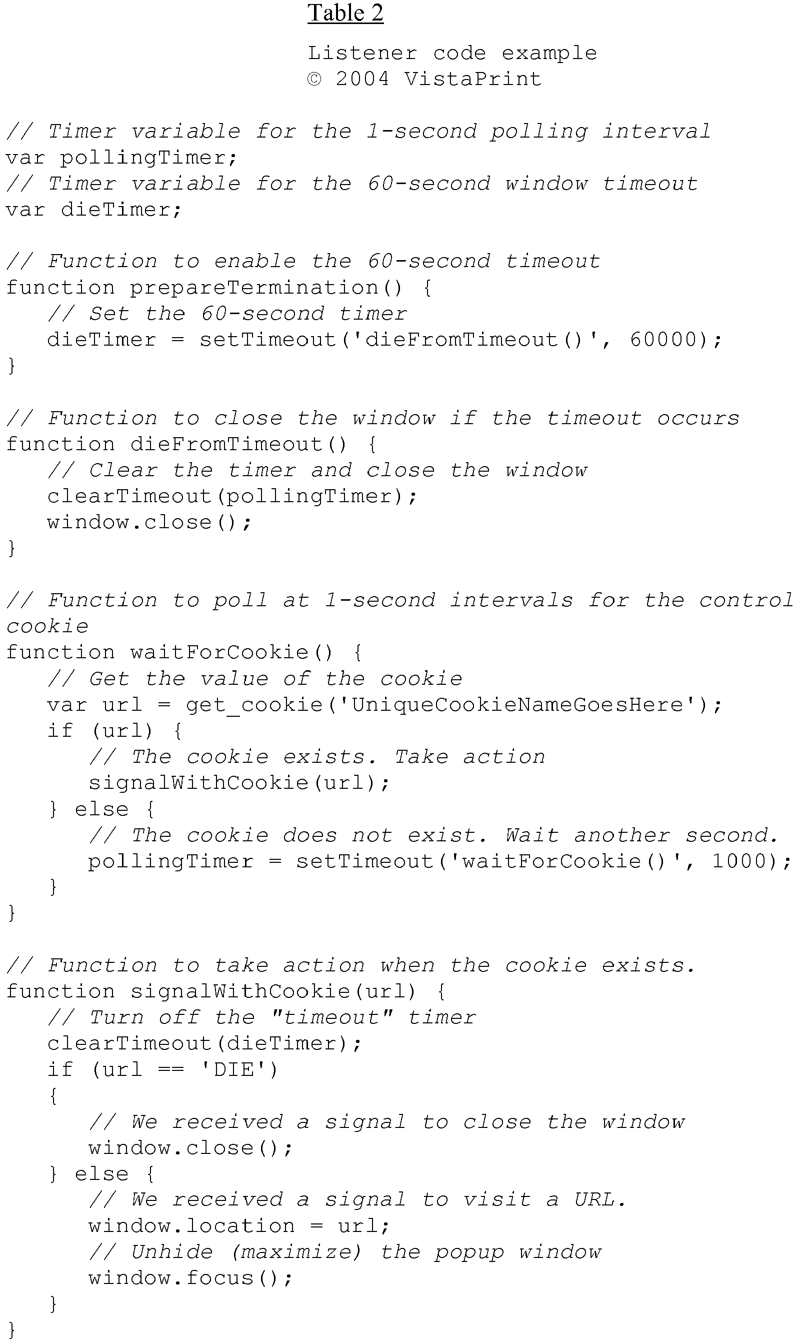

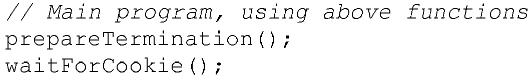

Notifier code 136 executes at server 130 to receive the cookie name created by maker code 132 and to create the control cookie for transmitting to client 110 along with the next page to be displayed. The control cookie is created to have the received cookie name and to have a value that is interpreted at client 110 by listener code 134 either as a URL that instructs listener code 134 to maximize window 230 and display the URL content in the window, or as a default value that instructs listener code 134 to close the window. An example of one embodiment of the notifier code in the JavaScript language is shown in Table 3.

**Table 3**

| Notifier Code Example |
|---|
| © 2004 VistaPrint |
| ```
 // Example of setting the control cookie to a URL
 document.cookie =
 'UniqueCookieNameGoesHere=http://www.msn.com';
 // Example of setting the control cookie to a prearranged
 // default value to tell the popup window to close
 document.cookie = 'UniqueCookieNameGoesHere=DIE';
``` |

Looking at Fig. 3 in more detail, at step 302 the user of client 110 has viewed and interacted with one or more Web pages, not shown, on server 130, has selected one or more products and/or services offered by the operator of the site, and is currently viewing and interacting with billing page A by entering the required credit card and other user payment information into information area 214 provided on page A for that purpose. Fig. 2A depicts the status of display 200 at this point.

When the user has supplied the required user information in information area 214 and wishes to proceed with the purchase of the selected products or services, the user activates control 212 at step 304. The billing page A code causes user information 214, such as the user's credit card details, to be transmitted to server 130 for processing.

At step 306, billing page A runs its cookie name generation code to create a cookie name. Only the cookie name is created at this time, not the cookie itself. No particular structure or format of this cookie name is required. In the disclosed embodiment, unique cookie names are created by incorporating a timestamp into the name. The use of unique cookie names provides scalability and flexibility by supporting the use of multiple simultaneous pop-up windows, if desired, by the operator of server 130.

At steps 308 and 310, the created cookie name to be used for the control cookie is provided to server 130 and window 230 via a URL query parameter. These two steps are required as a cookie name is generated in step 306.

At step 312, pop-up window 230 is created, passed the name of the control cookie, and then minimized right away. Fig. 2B depicts the status of display 200 during the brief period after pop-up 230 has been created, but before it has been minimized. Pop-up 230 is opened and displayed over the page A content. Button 224 associated with the new window is created and displayed on task bar 220. At this point, window 230 is blank. Because window 230 is a requested pop-up opened in direct response to the user's activation of control 212, it is not affected by typical blocking programs.

Very shortly after window 230 is opened, the pop-up code minimizes window 230, resulting in the situation of Fig. 2C. From a human perception standpoint, the user may notice window 230 appear and then very quickly be minimized, but rapid window changes on Web sites are not an uncommon experience for most users and will not significantly distract from the user's experience.

As mentioned above, when the user activates control 212, the user information 214 is provided to server 130 for the required processing by server 130, which may involve forwarding some or all information to and receiving a response from one or more other servers. This process may take a few seconds to complete. The eventual behavior and control of window 230 will be determined, at least partially, by the outcome of this processing at the server. When the required processing of the user information is completed at step 314, notifier code 136 at server 130 will create a cookie, using the name supplied to the server by the cookie name generation code. In constructing the cookie, server 130 will evaluate the result of the user information processing and make a determination whether to display window 230 to this user and, if so, what content should be displayed in the window. If server 130 desires to display information in window 230, the value of the created cookie will be the URL of the desired Web page to be displayed. If server 130 detected a user error in information block 214, or the user's information was not successfully processed by server 140, or the user's transaction does not meet the criteria established by the site operator, or for any other reason the site operator does not desire to display information in window 230, the value of the created cookie will be a default value that will be interpreted by the window code at client 110 as a command to close the window. At step 318, server 130 will provide the created cookie, and the appropriate next page C, to client 110 for displaying to the user.

While the above-described actions are taking place at server 130, the pop-up code executing at client 110 is checking for the creation of the cookie that will instruct the code what action to take. After receiving the cookie name from the name generation code at step 312, the listener code 134 at steps 320 and 322 repetitively polls for the availability of a cookie having that name. In the disclosed embodiment, step 322 is performed once per second, but the frequency of polling is a design choice and could be set to occur either less or more frequently. It is possible that a processing, network, or other problem might delay or prevent the creation or delivery of the cookie, therefore, a timeout check is performed at step 320 to remove window 230 from the user's desktop in the event that the cookie is not detected after a period of time. In the disclosed embodiment, the timeout period is set at 60 seconds, but longer or shorter timeout limits could be employed. If the cookie is not detected within the 60-second period, the pop-up is closed at step 328.

If the cookie is detected at step 322 prior to the expiration of the timeout period, the value associated with the cookie is analyzed. As discussed above, if server 130 determined that it desires to display information in pop-up 230 to this user, server 130 constructed the cookie to contain the URL of the desired content. The pop-up code recognizes the cookie value as a URL and uses the URL to redirect to and display the specified page in window 230. If server 130 determined that window 230 is not needed for this user, server 130 constructed the cookie to contain a default value that is interpreted by the pop-up window code as an instruction to close the window.

Fig. 2D depicts the situation where server 130 desired to display information to the user in pop-up window 230 in addition to the content of the next page C. When value assigned to the cookie was recognized as being a URL, window 230 was maximized to become visible to the user and page D was retrieved from the specified URL and displayed in the window. Page D could have been retrieved from server 130 or from any remote server connected to network 120, such as server 150.

Fig. 2E depicts the situation where server 130 did not desire to display information to the user in pop-up window 230. In this example, this could have been because the user's credit card transaction was not successful or the user otherwise did not meet the site operator's criteria. Because window 230 was not needed for this user, server 130 created a control cookie with the default value that was interpreted by the window code as a signal to close the window.

While an illustrative embodiment has been discussed, alternate embodiments could also be employed. Therefore, the described embodiment is to be considered as illustrative rather than restrictive and the scope of the invention is as indicated in the following claims.

## Claims

1. A method for creating a pop-up window (230) on a client computer display (200), the method comprising:
In response to the activation of at least one control element (212) by the user of the client computer (110):
a. creating a pop-up window (230) on the client computer display (200) and, immediately after creation of the pop-up window (230), automatically minimizing the pop-up window (230);
b. generating at the client computer (110) a control cookie name and transmitting said control cookie name over a network to a server (130) via a URL query parameter for use in creating a control cookie;
repetitively monitoring for the availability of a control cookie on the client computer (110), the control cookie having said control cookie name; and
upon availability of said control cookie, analysing said control cookie and, upon provision of a content identifier in said control cookie, maximizing the pop-up window (230) and displaying said content identified by the content identifier to the user.

2. The method of claim 1, wherein the content identifier is a URL.

3. The method of claim 1, further comprising:
upon provision of a default value in said control cookie, closing said pop-up window (230).

4. The method of any of claim 1, further comprising:
closing said pop-up window (230) if the control cookie is not detected within a predetermined period of time after the pop-up window (230) was created.

5. The method of claim 1, wherein said control cookie name generated at the client computer (110) is unique.

6. The method of claim 5, wherein said control cookie name includes a time stamp.

7. The method of any of claims 1 to 3, wherein said server (130) creates and transmits to the client computer (110) said control cookie having said control cookie name and including said content identifier, URL or default value.

8. A computer-readable medium bearing computer-readable instructions which, when executed by a computer, implement the method of any of claims 1 to 8.

9. The computer-readable medium of claim 10, wherein the computer-readable medium is a carrier wave communicated over a network.

10. A client computer apparatus (110), comprising:
displaying on a client computer display (200) a web page (A) transmitted to the client computer (110) through a network connection from a server apparatus (130), and
**characterized by**
means for
a. creating a pop-up window (230) on the client computer display (200) and, immediately after creation of the pop-up window (230), automatically minimizing the pop-up window (230);
b. generating at the client computer (110) a control cookie name and transmitting said control cookie name over a network to a server (130) via a URL query parameter for use in creating a control cookie;
in response to the activation of at least one control element (212) by the user of the client computer (110);
means for repetitively monitoring for the availability of a control cookie on the client computer (110), the control cookie having a predetermined name;
means for analysing said control cookie and determining if a content identifier is provided in said control cookie; and
means for maximizing the pop-up window (230) and displaying content identified by the content identifier in the control cookie to the user.

11. A client computer apparatus (110) according to claim 10, wherein
said means for analysing the control cookie are enabled to determine if a default value is provided in said control cookie; and further comprising
means for closing said pop-up window (230) if a default value is provided in said control cookie.

12. A client computer apparatus (110) according to claim 10 or 11, further comprising:
means for closing said pop-up window (230) if the means for monitoring for the availability of a control cookie on the client computer (110) do not indicate availability of a control cookie within a predetermined period of time after the pop-up window (230) was created.

## Patentansprüche

1. Verfahren zum Erzeugen eines Pop-up-Fensters (230) auf einer Clientcomputeranzeige (200), wobei das Verfahren umfasst:
In Reaktion auf die Aktivierung mindestens eines Steuerelementes (212) durch den Benutzer des Clientcomputers (110):
a. Erzeugen eines Pop-up-Fensters (230) auf der Clientcomputeranzeige (200) und, unmittelbar nach Erzeugung des Pop-up-Fensters (230), automatisches Minimieren des Pop-up-Fensters (230);
b. Generieren eines Steuer-Cookie-Namens an dem Cllentcomputer (110) und Übertragen des Steuer-Cookie-Namens über ein Netzwerk an einen Server (130) vermittels eines URL-Abfrageparameters zur Verwendung bei der Erzeugung eines Steuer-Cookies;
wiederholtes Überwachen bezüglich der Verfügbarkeit eines Steuer-Cookles auf dem Clientcomputer (110), wobei derSteuer-Cookle den Steuer-Cookie-Namen hat; und
bei Verfügbarkeit des Steuer-Cookies, Auswerten des Steuer-Cookies und, bei Bereitstellung eines Inhaltsidentiflkators in dem Steuer-Cookie, Maximieren des Pop-up-Fensters (230) und Anzeigen des durch den Inhaltsidentifikator identifizierten Inhalts fürden Benutzer.

2. Verfahren gemäß Anspruch 1, wobei der Inhaltsidentifikator eine URL ist.

3. Verfahren gemäß Anspruch 1, weiterhin umfassend:
Schließen des Pop-up-Fensters (230) bei Bereitstellung eines Vorgabewertes in dem Steuer-Cookie.

4. Verfahren gemäß Anspruch 1, weiterhin umfassend:
Schließen des Pop-up-Fensters (230), wenn der Steuer-Cookie nicht innerhalb eines vorbestimmten Zeitraums, nachdem das Pop-up-Fenster (230) erzeugt wurde, detektlert wird.

5. Verfahren gemäß Anspruch 1, wobei der an dem Clientcomputer (110) generierte Steuer-Cookie-Name eindeutig ist.

6. Verfahren gemäß Anspruch 5, wobei der Steuer-Cookie-Name einen Zeitstempel aufweist.

7. Verfahren gemäß einem der Ansprüche 1 bis 3, wobei der Server (130) den Steuer-Cookie mit dem Steuer-Cookie-Namen und einschließlich des Inhaltsidentifikators, der URL oder des Vorgabewertes erzeugt und an den Clientcomputer (110) überträgt.

8. Computerlesbares Medium, das computerlesbare Anweisungen trägt, die bei Ausführung durch einen Computerdas Verfahren gemäß einem der Ansprüche 1 bis 8 implementieren.

9. Computerlesbares Medium gemäß Anspruch 10, wobei das computerlesbare Medium eine über ein Netzwerk kommunizierte Trägerwelle ist.

10. Clientcomputervorrichtung (110), umfassend:
Anzeigen einer von einer Server-Vorrichtung (130) über eine Netzwerkverbindung an den Clientcomputer (110) übertragenen Webseite (A) auf einer Clientcomputeranzeige (200), und
**gekennzeichnet durch**
Mittel zum
a. Erzeugen eines Pop-up-Fensters (230) auf der Clientcomputeranzelge (200) und, unmittelbar nach Erzeugung des Pop-up-Fensters (230), automatisches Minimieren des Pop-up-Fensters (230);
b. Generieren eines Steuer-Cookie-Namens an dem Clientcomputer (110) und Übertragen des Steuer-Cookie-Namens über ein Netzwerk an einen Server (130) vermittels eines URL-Abfrageparameters zur Verwendung bei der Erzeugung eines Steuer-Cookies;
in Reaktion auf die Aktivierung mindestens eines Steuerelementes (212) **durch** den Benutzer des Clientcomputers (110);
Mittel zum wiederholten Überwachen bezüglich der Verfügbarkelt eines Steuer-Cookies auf dem Clientcomputer (110), wobei der Steuer-Cookie einen vorbestimmten Namen hat;
Mittel zum Auswerten des Steuer-Cookies und Bestimmen dessen, ob in dem Steuer-Cookie ein Inhaltsidentifikator bereitgestellt ist; und
Mittelzum Maximieren des Pop-up-Fensters (230) und Anzeigen von **durch** den Inhaltsidentifikator in dem Steuer-Cookie Identifiziertem Inhalt für den Benutzer.

11. Clientcomputervorrichtung (110) gemäß Anspruch 10, wobei
die Mittel zum Auswerten des Steuer-Cookies in die Lage versetzt sind, zu bestimmen, ob ein Vorgabewert in dem Steuer-Cookie bereitgestellt ist; und weiterhin umfassend
Mittel zum Schließen des Pop-up-Fensters (230), wenn ein Vorgabewert in dem Steuer-Cookie bereitgestellt ist.

12. Clientcomputervorrichtung (110) gemäß einem der Ansprüche 10 oder 11, weiterhin umfassend:
Mittel zum Schließen des Pop-up-Fensters (230), wenn die Mittelzum Überwachen bezüglich der Verfügbarkelt eines Steuer-Cookies auf dem Clientcomputer (110) die Verfügbarkeit eines Steuer-Cookies nicht innerhalb eines vorbestimmten Zeitraums, nachdem das Pop-up-Fenster (230) erzeugt wurde, anzeigen.

## Revendications

1. Méthode de création d'une fenêtre contextuelle (230) sur un écran d'ordinateur client (200), la méthode comprenant :
En réponse à l'activation d'au moins un élément de contrôle (212) par l'utilisateur sur l'ordinateur client (110) :
a, la création d'une fenêtre contextuelle (230) sur l'écran d'ordinateur client (200) et immédiatement après la création de la fenêtre contextuelle (230), la réduction automatique de la fenêtre contextuelle (230) ;
b. la génération sur l'ordinateur client (110) d'un nom de cookie de contrôle et la transmission dudit nom de cookie de contrôle par l'intermédiaire d'un réseau à un serveur (130) via un paramètre d'interrogation URL en vue de l'utilisation dans la création d'un cookie de contrôle ;
la surveillance répétitive de la disponibilité d'un cookie de contrôle sur l'ordinateur client (110), le cookie de contrôle ayant ledit nom de cookie de contrôle ; et
en cas de disponibilité dudit cookie de contrôlé, l'analyse dudit cookie de contrôle, et en cas de livraison d'un identificateur de contenu dans ledit cookie de contrôle, l'agrandissement de la fenêtre contextuelle (230) et l'affichage dudit contenu identifié par l'identificateur de contenu relatif à l'utilisateur.

2. Méthode selon la revendication 1, dans laquelle l'identificateur de contenu est un URL.

3. Méthode selon la revendication 1, comprenant par ailleurs :
en cas de livraison d'une valeur par défaut dans ledit cookie de contrôle, la fermeture de ladite fenêtre contextuelle (230).

4. Méthode selon la revendication 1, comprenant par ailleurs :
la fermeture de ladite fenêtre contextuelle (230) si le cookie de contrôle n'est pas détecté au
sein d'une période de temps prédéterminée après que la fenêtre contextuelle (230) a été créée.

5. Méthode selon la revendication 1, dans laquelle ledit nom de cookie de contrôle généré sur l'ordinateur client (110) est unique.

6. Méthode selon la revendication 1, dans laquelle ledit nom de cookie de contrôle comporte un horodateur.

7. Méthode selon une quelconque des revendications 1 à 3, dans laquelle ledit serveur (130) crée et transmet à l'ordinateur client (110) ledit cookie de contrôle ayant ledit nom de cookie de contrôle et comportant ledit identifiant de contenu, l'URL ou la valeur par défaut.

8. Moyen de stockage lisible par ordinateur portant des instructions lisibles par ordinateur qui, lorsqu'elles sont exécutées par un ordinateur, implémentent la méthode d'une quelconque des revendications 1 à 8.

9. Moyen de stockage lisible par ordinateur selon la revendication 10, dans lequel le moyen de stockage lisible par ordinateur est une onde porteuse communiquée par l'intermédiaire d'un réseau.

10. Appareil d'ordinateur client (110) comprenant:
l'affichage sur un écran d'ordinateur client (200) d'un site Web (A) transmis à l'ordinateur client (110) par une connexion de réseau en provenance d'un appareil de serveur (130) et
**caractérisé par**
des moyens en vue de
a. la création d'une fenêtre contextuelle (230) sur l'écran d'ordinateur client (200) et immédiatement après la création de la fenêtre contextuelle (230), la réduction automatique de la fenêtre contextuelle (230) ;
b. la génération sur l'ordinateur client (110) d'un nom de cookie de contrôle et la transmission dudit nom de cookie de contrôle par l'intermédiaire d'un réseau à un serveur (130) via un paramètre d'interrogation URL en vue de l'utilisation dans la création d'un cookie de contrôle;
en réponse à l'activation d'au moins un élément de contrôle (212) par l'utilisateur sur l'ordinateur client (110) :
des moyens en vue de la surveillance répétitive de la disponibilité d'un cookie de contrôle sur l'ordinateur client (110), le cookie de contrôle ayant un nom prédéterminé ;
des moyens en vue de l'analyse dudit cookie de contrôle et de la détermination si un identificateur de contenu est livré dans ledit cookie de contrôle, et
des moyens en vue de l'agrandissement de la fenêtre contextuelle (230) et de l'affichage à l'utilisateur du contenu identifié par l'identificateur de contenu dans le cookie de contrôle.

11. Appareil d'ordinateur client (110) selon la revendication 10, dans lequel
des moyens en vue de l'analyse du cookie de contrôle sont activés pour déterminer si une valeur par défaut est livrée dans ledit cookie de contrôle, et comprenant par ailleurs
des moyens en vue de la fermeture de ladite fenêtre contextuelle (230) si une valeur par défaut est livrée dans ledit cookie de contrôle.

12. Appareil d'ordinateur client (110) selon la revendication 10 ou 11, comprenant par ailleurs;
des moyens en vue de la fermeture de ladite fenêtre contextuelle (230) si les moyens en vue de surveiller la disponibilité d'un cookie de contrôle sur l'ordinateur client (110) n'indiquent pas la disponibilité d'un cookie de contrôle au sein d'une période de temps prédéterminée après que la fenêtre contextuelle (230) a été créée.
